# EUROPEAN PATENT SPECIFICATION

(11) **EP 0 560 420 B1**
(45) Date of publication and mention of the grant of the patent: **14.08.1996**
(21) Application number: 93200519.2
(22) Date of filing: 24.02.1993
(51) Int. Cl.: H01K 1/32, H01K 7/00, C03C 3/06, C03C 4/02

(54) **Electric incandescent infrared lamp and method of manufacturing this lamp**
Elektrische Infrarot-Glühlampe und Verfahren zur Herstellung derselben
Lampe électrique infrarouge à incandescence et procédé pour sa fabrication

(30) Priority: 02.03.1992 EP 92200585
(43) Date of publication of application: 15.09.1993
(73) Proprietor: Philips Electronics N.V., 5621 BA Eindhoven (NL)
(72) Inventor: Mewissen, Jan Alfons Catharina, NL-5656 AA Eindhoven (NL)
(74) Representative: Rooda, Hans

(56) References cited:
- EP-A- 0 429 230
- WO-A-93/01744
- DE-A- 1 496 072
- FR-A- 1 370 013
- US-A- 4 421 803
- PATENT ABSTRACTS OF JAPAN vol. 15, no. 213 (E-1073) 30 May 1991 & JP-A-03 059 981

## Description

The invention relates to an electric infrared incandescent lamp comprising:
a lamp vessel which is closed in a vacuumtight manner ad which is made of glass having a SiO₂ content of at least 95% by weight;
a incandescent body arranged in the lamp vessel;
current supply conductors which enter the lamp vessel ad are connected to the incandescent body;
which lamp emits generated radiation for the major part through a lamp vessel portion to whose glass a colorant has been added.
The invention also relates to a method of manufacturing such a incandescent lamp.

Such an electric incandescent lamp is known from EP 0 429 230 A2.

The known lamp is a halogen incandescent lamp which emits mainly IR radiation. The lamp vessel portion from which the major portion of the generated radiation issues comprises copper as the colorant added to its glass.

If only a portion of the spectrum generated by the electric element is necessary in applications of electric lamps, the remaining radiation may be detrimental, unpleasant, or of a unpleasant intensity. Thus the emitted UV radiation may be detrimental when visible light is used, or visible radiation may be unpleasant when IR radiation is used. The latter may be the case in industrial applications of IR radiators, when used for room heating or in electric cooking appliances.

Even in the case of IR incandescent lamps having a very low visible luminous efficacy, for example 5 lm/W, the luminous flux may still be very considerable when a high power is installed, and may as a result, for example, be dazzling or too brightly illuminating.

According to GB 2.176.587 A, IR radiators are sometimes used surrounded by a red quartz pipe. This pipe absorbs the emitted light for the major part. The combination of lamp and pipe, however, is expensive and in addition requires provisions for keeping lamp and pipe coaxially positioned.

In the lamp according to the cited EP 0 429 230 A2, the lamp vessel has end portions of uncoloured glass with a high SiO₂ content, such as quartz glass or Vycor, on either side of the lamp vessel portion which is coloured red with copper and filters the radiation. The red-coloured lamp vessel portion is obtained in that quartz glass comprising copper oxide as a precursor of the added colorant is treated in a hydrogen atmosphere in order to reduce copper oxide to copper.

Glass having a high SiO₂ content, 95% by weight or more, can only be deformed at high temperatures. Such deformations are necessary for making a seal in glass from which a lamp vessel is formed, for example in a tube, for example in that a zone therein is caused to collapse and to fuse together, or is closed by pinching, for example, around one or several current supply conductors. In a lamp factory, such a seal cannot be made in the radiation-filtering lamp vessel portion itself, since the glass cannot be brought to the required high temperature by the available means, such as burners. This is because the glass of that lamp vessel portion has a high heat conductance. If the glass is heated locally in order to bring it to a sufficiently high temperature for deformation so as to make a seal, the heat provided is removed very quickly to adjoining locations and radiated out.

The radiation-filtering lamp vessel portion in the known lamp is fused to uncoloured quartz glass at its ends by means of a glass butt weld. Such a butt weld can still be realised, since only the butt end of the lamp vessel portion need be softened for this.

The known lamp has some disadvantages. Its manufacture is complicated because several components are necessary between which butt weld joints must be made, and because making of these joints is difficult. The lamp has the additional disadvantage that the butt welds render a much lower gas pressure in the lamp permissible than is usual, since the welds are not resistant to the usual pressures. A further disadvantage is that undesirable radiation is capable of issuing unhampered through the end portions.

US Patents 3,252,036, 3,258,631 and 3,399,043 describe electric incandescent lamps with lamp vessels of high SiO₂ content whose radiation-filtering portions are coloured, while the end portions with the lamp vessel seals are uncoloured. The lamp vessel is manufactured in that a tube of porous glass of high SiO₂ content is impregnated with a solution of iron salts, nickel salts, and aluminium salts at a distance from its ends, and is then dried and baked.

From DE-A-1 496 072 an electric lamp is known the lamp vessel of which consists of substantially colourless glass containing UV-radiation absorbing metal ions to absorb radiation having a wave length below 300 nm.

It is an object of the invention to provide an electric incandescent infrared lamp of the kind described in the opening paragraph which emits less undesirable radiation during operation.

According to the invention, this object is realised in that the lamp vessel entirely consists of glass to which a colorant has been added.

The invention is based on the recognition that the lamp may be readily manufactured by shaping the lamp vessel from a body, for example a tube, made of glass with a high SiO₂ content which contains a precursor of the colorant. The body may be deformed in its uncoloured or weakly coloured state so as to shape the lamp vessel and seal it around the current supply conductors, for example, through local pinching or fusion. The lamp with the finished lamp vessel is then heated in its entirety in order to convert the precursor into the colorant. If reducing flames are used for heating the hollow body in order to deform the latter, an incipient coloration from the precursor may already be observed locally.

The fact that the entire lamp vessel is coloured in the lamp according to the invention, and not just that portion thereof through which the major portion of the emitted radiation is issued during operation, achieves that less undesirable radiation leaves the lamp.

The lamp and the method according to the invention have the advantage that they are simpler. A smaller number of components is required compared with the situation in which the lamp vessel is built up from a number of parts by butt welding. This also implies a logistic simplification. In addition, the lamp can be manufactured on standard machines.

In view of the availability of the glass, it is favourable to use quartz glass doped with oxide for IR radiators, which glass is converted into red or orangered quartz glass through reduction at elevated temperature.

It is noted that porous glass with a high SiO₂ content which is impregnated with a mixture of salts so as to form a red colour therefrom by baking is not suitable for the lamp according to the invention. Such porous glass is highly hygroscopic. The water evolved therefrom if a lamp were made from this material before the glass has been brought into its non-porous end state, would be fatal to the incandescent body. Even if no impregnation with a salt solution were necessary when this glass material were used, still so much water would be evolved from the glass material that the lamp would reach the end of its life almost immediately.

It is obvious that it is immaterial to the essence of the invention whether the current supply conductors enter the lamp vessel through one seal or, for example, through two mutually opposing seals. Neither is it important whether the lamp vessel receives, for example, a gas filling of an inert gas with a halogen added, for example bromine or hydrogen bromide, for example, dosed as methylene bromide, before the only or the last seal is made around a current supply conductor, or whether the gas filling is provided through an exhaust tube which is then closed.

Embodiments of the lamp according to the invention are shown in the drawing, in which
Fig. 1 shows a first embodiment in side elevation, and
Fig. 2 shows a second embodiment in side elevation.

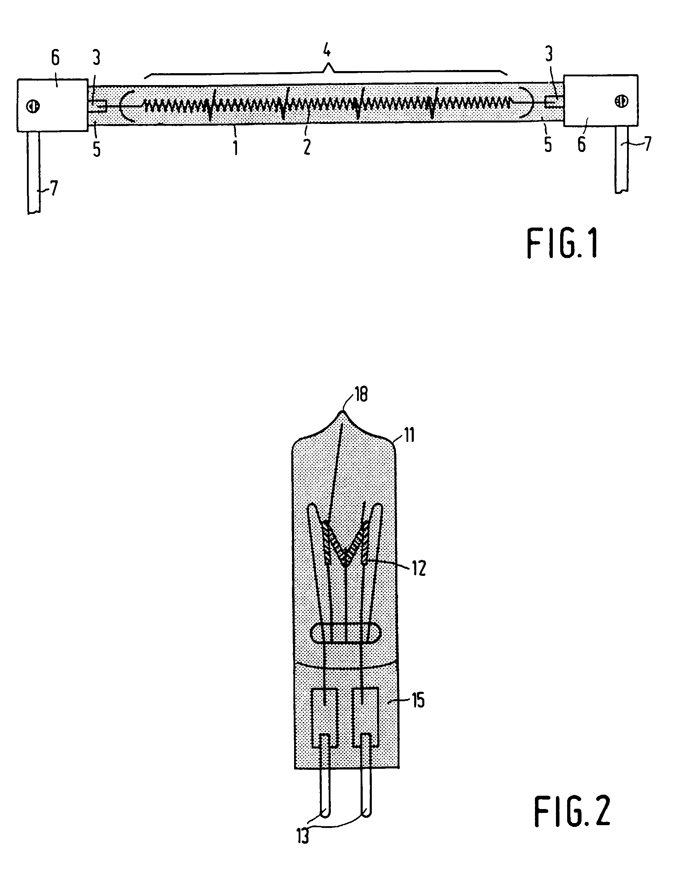

The electric incandescent infrared lamp of Fig. 1 has a lamp vessel 1 which is closed in a vacuumtight manner and is made of glass having an SiO₂ content of at least 95% by weight. An incandescent body 2 is arranged in the lamp vessel. Current supply conductors 3 enter the lamp vessel and are connected to the incandescent body. The lamp emits the generated radiation for the major part through a lamp vessel portion to whose glass a colorant has been added.

The lamp has pinched seals 5 around respective current supply conductors. Insulating bodies 6 of ceramic material are connected to the seals 5. A cable 7 issues to the exterior from each body. The lamp has a filling of argon/nitrogen to which methylene bromide has been added.

In the drawn incandescent lamp according to the invention, the lamp vessel 1 in its entirety consists of glass to which a colorant has been added. The glass of the lamp vessel contains copper so as to give it a red colour, so that the lamp emits mainly IR radiation and red light, and causes little glare.

In Fig. 2, corresponding parts have reference numerals which are 10 higher than those in Fig. 1. The lamp has an exhaust tube tip 18, where the lamp was closed after its gas filling was provided.

The lamps were manufactured in a manner usual for the manufacture of halogen incandescent lamps from colourless quartz glass. For obtaining the lamp vessel, however, quartz glass tubing was used during the manufacture to which copper oxide, for example up to 0.4% by weight, had been added in the molten state, so that the tube was slightly pink After the lamps had been completed structurally, they were fired in a reducing atmosphere, for example, at approximately 1000° C for ten minutes in hydrogen. Copper oxide was reduced to copper during this, because quartz glass is permeable to hydrogen at temperatures above approximately 300° C, and the entire lamp vessel became red. The lamp of Fig. 1 was then provided with the ceramic bodies and the cables. The luminous flux of the lamp was no more than 4% of the luminous flux of an identical lamp having a colourless quartz glass lamp vessel.

## Claims

1. An electric incandescent infrared lamp comprising:
a lamp vessel (1) which is closed in a vacuumtight manner and which is made of glass having a SiO₂ content of at least 95% by weight;
an incandescent body (2) arranged in the lamp vessel;
current supply conductors (3) which enter the lamp vessel (1) and are connected to the incandescent body (2);
which lamp emits generated radiation for the major part through a lamp vessel portion to whose glass a colorant has been added,
characterized in that the lamp vessel (1) entirely consists of glass to which a colorant has been added.

2. An electric incandescent infrared lamp as claimed in Claim 1, characterized in that the glass of the lamp vessel (1) comprises copper.

3. A method of manufacturing an electric incandescent infrared lamp which is provided with:
a lamp vessel (1) which is closed in a vacuumtight manner and is made of glass having a SiO₂ content of at least 95% by weight;
an incandescent body (2) arranged in the lamp vessel (1);
current supply conductors (3) which enter the lamp vessel (1) and are connected to the incandescent body (2);
by which method a glass body is deformed so as to form a lamp vessel (1),
characterized in that a glass body containing a precursor of a colorant is used for forming the lamp vessel (1), and the lamp with the completed lamp vessel (1) is heated in order to convert the precursor into the colorant.

4. A method as claimed in Claim 3, characterized in that glass containing copper oxide as the precursor of copper is used.

## Patentansprüche

1. Elektrische Infrarot-Glühlampe mit:
einem vakuumdicht verschlossenen Lampengefäß (1) aus Glas mit einem SiO₂-Gehalt von mindestens 95 Gew.-%;
einem in dem Lampengefäß angeordneten Glühkörper (2);
Stromzuführleitern (3), die in das Lampengefäß (1) gelangen und mit dem Glühkörper (2) verbunden sind;
wobei die Lampe erzeugte Strahlung großenteils durch einen Lampengefäßabschnitt emittiert, dessen Glas ein Farbstoff zugefügt worden ist,
dadurch gekennzeichnet, daß das Lampengefäß (1) vollständig aus Glas besteht, dem ein Farbstoff zugefügt worden ist.

2. Elektrische Infrarot-Glühlampe nach Anspruch 1, dadurch gekennzeichnet, daß das Glas des Lampengefäßes (1) Kupfer umfaßt.

3. Verfahren zum Herstellen einer elektrischen Infrarot-Glühlampe, die versehen ist mit:
einem vakuumdicht verschlossenen Lampengefäß (1) aus Glas mit einem SiO₂-Gehalt von mindestens 95 Gew.-%;
einem in dem Lampengefäß (1) angeordneten Glühkörper (2);
Stromzuführleitern (3), die in das Lampengefäß (1) gelangen und mit dem Glühkörper (2) verbunden sind;
wobei durch das Verfahren ein Glaskörper so verformt wird, daß er ein Lampengefäß (1) bildet,
dadurch gekennzeichnet, daß ein Glaskörper mit einem Vorläufer eines Farbstoffes zum Bilden des Lampengefäßes (1) verwendet wird, und die Lampe mit dem fertigen Lampengefäß (1) erhitzt wird, um den Vorläufer in den Farbstoff umzusetzen.

4. Verfahren nach Anspruch 3, dadurch gekennzeichnet, daß Glas mit Kupferoxid als Vorläufer von Kupfer verwendet wird.

## Revendications

1. Lampe électrique infrarouge à incandescence comportant:
un récipient de lampe (1) qui est fermé d'une manière étanche au vide et qui est fabriqué à partir de verre présentant une teneur en SiO₂ au moins égale à 95% en poids;
un corps incandescent (2) disposé dans le récipient de lampe;
des conducteurs d'alimentation de courant (3) entrant dans le récipient de lampe (1) et étant reliés au corps incandescent (2);
ladite lampe émet un rayonnement engendré pour la majeure partie à travers une partie de récipient de lampe constituée de verre auquel a été ajouté un colorant,
caractérisée en ce que le récipient de lampe (1) est entièrement constitué de verre auquel a été ajouté un colorant.

2. Lampe électrique infrarouge à incandescence selon la revendication 1, caractérisée en ce que le verre du récipient de lampe (1) comporte du cuivre.

3. Procédé de fabrication d'une lampe électrique infrarouge à incandescence munie de:
un récipient de lampe (1) fermé d'une manière étanche au vide et fabriqué à partir de verre présentant une teneur en SiO₂ au moins égale à 95 % en poids;
un corps incandescent (2) disposé dans le récipient de lampe (1);
des conducteurs d'alimentation de courant (3) entrant le récipient de lampe (1) et étant reliés au corps incandescent (2);
procédé suivant lequel un corps en verre est déformé de manière à constituer un récipient de lampe (1),
caractérisé en ce qu'un corps en verre contenant un précurseur d'un colorant est utilisé pour constituer le récipient de lampe (1) et en ce que la lampe avec le récipient de lampe fini (1) est chauffée pour convertir le précurseur en le colorant.

4. Procédé selon la revendication 3, caractérisé en ce que du verre contenant de l'oxyde de cuivre comme précurseur de cuivre est appliqué.
